# EUROPEAN PATENT SPECIFICATION

(11) **EP 4 572 964 B1**
(45) Date of publication and mention of the grant of the patent: **09.12.2026**
(21) Application number: 23783928.7
(22) Date of filing: 16.08.2023
(51) Int. Cl.: B60D 1/02, B60D 1/52, B60P 1/28, B60P 3/06

(54) **SYSTEM FOR MOVING WORKING MACHINE AND LOGISTIC METHOD IN MINING OR QUARRY**
SYSTEM ZUM BEWEGEN EINER ARBEITSMASCHINE UND LOGISTIKVERFAHREN IM BERGBAU ODER IN DER STEINBRÜCHEN
SYSTÈME DE DÉPLACEMENT DE MACHINE DE TRAVAIL ET PROCÉDÉ LOGISTIQUE DANS L'EXPLOITATION DE MINE OU DE CARRIÈRE

(30) Priority: 17.08.2022 FI 20225731
(43) Date of publication of application: 25.06.2025
(73) Proprietor: Sleipner Group Oy, 40100 Jyväskylä (FI)
(72) Inventor: HÖYLÄ, Teijo, 40100 JYVÄSKYLÄ (FI); MIETTINEN, Joona, 40100 JYVÄSKYLÄ (FI)
(74) Representative: Kespat Oy
(86) International application number: PCT/FI2023/050470
(87) International publication number: WO 2024/038226

(56) References cited:
- GB-A- 2 583 009
- JP-A- S6 112 413
- US-B2- 10 040 327
- US-B2- 9 868 328

## Description

The invention is related to a system for moving a work machine, wherein the system includes:
- a transfer vehicle comprising a tow point,
- a low trailer comprising a platform for supporting the work machine on the low trailer during transfer and a drawbar for fastening the low trailer pivotally to a tow point for towing the low trailer with the transfer vehicle.

Another object of the invention is a logistic method in mining or quarrying.

In mines or quarries, drilling apparatuses equipped with a crawler chassis are generally used for drilling holes in soil for later installation of explosives in these drill holes for extracting soil material from the soil. After drilling, the drill apparatus must be moved to the next application site, which can be located rather far from the previous worksite, even at a distance of kilometres in case of a large quarry. Transferring crawler chassis work machines, such as a drill apparatus, is slow and wears the crawler chassis notably. For this reason, transfers are often performed using a low trailer. The work machine is moved onto the low trailer and the low trailer is towed from place to place with a transfer vehicle.

Generally, however, it has been a problem that mines or quarries do not have a low trailer and a transfer vehicle optimised for transferring crawler chassis drill apparatuses or other mobile work machines. An example of prior art is the DB80 transfer trailer manufactured by Finnish Sleipner Finland Oy; however, this is clearly too big and heavy for transferring a work machine that weighs a few tens of tons. On the other hand, low trailers used in road traffic cannot have been used for transfers, because the traction of lorries towing these is not sufficient for transfers on occasionally slippery road surfaces of mines or quarries. On the other hand, it may also be challenging to find a transfer vehicle suitable for the transfer.

Publication WO 2022064104 A1 representing prior art proposes a draw arrangement between a mine car and a low trailer for improving the traction of the mine car and preventing easing up of the front wheels of the mine car.

US 2019270353 A1 proposes a system for fastening a trailer to a transfer vehicle, wherein the system includes a transfer vehicle comprising a tow point and a dump bed articulated with a dump hinge. The dump hinge of the dump bed is formed in the context of the traction arrangement.

WO 9637093 A1 proposes a system for connecting an implement to a transfer vehicle, wherein the system includes a transfer vehicle comprising a tow point and a dump bed articulated with a dump hinge. US 9 868 328 B2 discloses a system for transferring a crawler chassis work machine known in the prior art.

A system for fastening a trailer to a transfer vehicle, wherein the system includes a transfer vehicle comprising a tow point and a dump bed articulated with a dump hinge, is known from publication US 3298744 A. The tow point is formed near the dump hinge of the dump bed of the transfer vehicle.

The object of this invention is to provide a system for transferring a work machine utilising existing equipment of a mine or a quarry and optimised for transferring work machines, preferably for transferring crawler chassis work machines. The characteristic features of the system according to the invention are set forth in the appended Claim 1. Another object of the invention is to provide a logistic method, wherein the transfer vehicle fleet existing in a mine or a quarry can be utilised for transferring a crawler chassis drill apparatus of a work machine. The characteristic features of the method according to the invention are set forth in the appended Claim 15.

The object of the system according to the invention can be achieved with a system for transferring a work machine, wherein the system includes an articulated frame steered transfer vehicle comprising a tow point, at least one dump hinge implemented with a transverse pivot shaft, a dump bed articulated by means of the dump hinge and a support point placed at a distance below the dump hinge, and the system further includes a low trailer comprising a platform for supporting the work machine on the low trailer during the transfer and a drawbar for fastening the low trailer pivotally to the tow point for towing the low trailer with the transfer vehicle. Moreover, the system further includes a draw arrangement supported to the pivot shaft and the support point non-rotatably with a torque arm included in the draw arrangement, wherein the draw arrangement includes a draw element for connecting the low trailer to the transfer vehicle with the draw arrangement.

Using a system according to the invention, the transfer of a work machine can be performed on a low trailer using articulated frame steered transfer vehicles existing in a mine or a quarry that are meant for earth moving. Thus, the utilisation rate of transfer vehicles improves and work machines can be transferred quickly as the transfer vehicles are nearby for the transfer. By using the dump hinge of the dump bed as the tow point between the transfer vehicle and the low trailer, the transfer vehicle can be utilised for the transfer with very small modifications, and it is not necessary to remove the dump bed during the transfer, such as when using a fifth wheel coupling or a pintle hook, for example. On the other hand, the dump bed enables a counterweight loaded on the dump bed of the transfer vehicle for increasing the traction of the rear wheels of the transfer vehicle on a slippery surface. On the other hand, the dump hinge of the dump bed is very strong and resists stresses applied to it when towing the low trailer. When using an articulated frame steered vehicle, the turnability of the combination of a transfer vehicle and a low trailer is good due to the frame articulation of the transfer vehicle, and the low trailer can have a rigid frame without a vertical articulation, which makes the manufacture of the low trailer more affordable. When using a draw arrangement, it is not necessary to remove the dump bed, since the same dump hinge is used for fastening as for the dump bed. On the other hand, it is not necessary to remove the draw arrangement when using the dump bed for dumping material; thus, the draw arrangement can be in place in the transfer vehicle also when the transfer vehicle is not used for transferring a low trailer.

By supporting the draw arrangement to the transfer vehicle with a torque arm, free rotation of the draw arrangement around the dump hinge is prevented, which is unnecessary. In other words, swinging of the draw arrangement and its hitting against the frame and components of the transfer vehicle is prevented during the transfer.

It is surprising that a draw arrangement makes it possible to arrange a tow point for a low trailer, usable simultaneously with a dump bed, at the rear of the transfer vehicle. A fifth wheel coupling, for example, is such a large construction that its use in the context of a dump hinge is not possible without limiting the movements of the dump bed, which prevents the use of the dump bed for material moving between transfers.

Advantageously, articulated frame steered means that the transfer vehicle frame includes a front frame and a rear frame articulated to each other with a frame articulation, and an actuator, preferably hydraulic cylinders, between the front frame and the rear frame for adjusting the angle between these for steering the transfer vehicle.

Advantageously, the dump bed means a cup-like loading space on the transfer vehicle, which is articulated to the transfer vehicle with a dump hinge and is tiltable around the dump hinge for unloading material from the dump bed based on gravity. Advantageously, the dump bed can be tilted by 30° to 90°, preferably 45° to 90° relative to the lengthwise direction of the transfer vehicle frame.

Advantageously, the tow point is composed of two pivot pins placed at a distance from each other for connecting the lugs of the dump bed to the lugs of the frame.

In other words, the tow point is formed in the dump hinge of the dump bed of the transfer vehicle.

Advantageously, the draw arrangement comprises lugs for hanging the draw element below the transverse pivot shaft of the dump hinge, and a draw construction formed between the lugs, the draw construction including the draw element. With the lugs, the draw arrangement can be lowered to a safe position from the dump bed even if the dump bed is tilted.

Advantageously, the transverse pivot shaft is composed of two pivot pins having extensions on which the lugs are fastened.

In this way, the dump hinge can be easily used at the same time for both articulating the dump bed and forming a tow point. In some cases, even the original pins of the dump bed are sufficiently long for fastening the draw arrangement, but another alternative is to change pins that are longer than usual for the transverse pivot shaft of the dump hinge.

Advantageously, the pivot pins are at least 40 to 100 mm longer than the length between the outer edges of the dump bed lugs so that an extension is formed in the pivot pins for the draw arrangement.

Advantageously, a slide bearing is provided between the pivot pin and the lug of the draw arrangement. A slide bearing reduces the wear of the pivot pin.

According to a first embodiment, the support point is a towing block included in the transfer vehicle for supporting a torque arm to the transfer vehicle, and the draw arrangement includes a tow plate and the draw element, which is a tow ball, formed in the tow plate. Although articulated frame steered vehicles have not previously been used for towing trailers or low trailers together with a dump bed, the rear end frame of articulated frame steered transfer vehicles generally includes a towing block by means of which it has been possible to tow a stuck or broken transfer vehicle. Binding the draw arrangement to the towing block with a torque arm prevents free rotation of the draw arrangement around the dump hinge, which is unnecessary. As the low trailer is advantageously fastened to a tow ball, the tow ball provides a dump hinge for the tilting and turning of the low trailer. Depending on the structure of the transfer vehicle and particularly the structure of the towing block, the draw arrangement can be implemented using a tow ball according to the first or the second embodiment, which are described in more detail later on.

According to an embodiment, the tow ball includes a locking hole and a locking pin that goes through the locking hole for locking the drawbar of the low trailer to the tow point. This ensures the locking of the trailer drawbar to the towing transfer vehicle in a simple way.

Advantageously, the drawbar of the low trailer includes a ball hitch, which comprises sliding surfaces that are arranged to receive both vertical and horizontal loads and enable both rotational and turning movements. This enables the turning and tilting of the low trailer with the use of a tow ball and a ball hitch, and the draw arrangement can be fixedly fastened.

According to an embodiment, the tow ball includes a leg for fastening the tow ball to a tow plate, a curved section fastened to the leg enabling the turning of the low trailer relative to the tow point around the horizontal and vertical axis, a narrowing conical section fastened to the curved section for facilitating the connection of the drawbar, the locking hole formed in the conical section and the locking pin arranged through the locking hole for locking the drawbar to the tow ball. This kind of tow ball construction enables versatile mobility of the drawbar around the tow ball, but also an easy locking of the ball hitch to the tow ball thanks to the upwardly narrowing conical section. In turn, the use of a locking pin and hole also ensures the locking in a situation of a negative drawbar weight regardless of the narrowing conical section of the tow ball. On the other hand, with the use of a locking pin and hole, the use of a separate locking element is avoided in the context of a ball hitch.

According to a third embodiment, the support point is a part of the transfer vehicle frame.

According to a third embodiment, the draw arrangement includes a framework structure and a pintle hook connected to the framework structure, and the drawbar includes a towing eyelet for connecting a low trailer to the pintle hook. With this kind of draw arrangement, the low trailer can be advantageously fastened to the transfer vehicle utilising existing commercial components.

Advantageously, the torque arm is arranged to lean on the transfer vehicle frame. More precisely, the torque arm leans on the front side in the travel direction of the frame beam included in the frame in order to be used to transfer traction. When implemented in this way, the torque arm is a very simple construction and need not be separately fastened to the transfer vehicle.

Advantageously, the platform is essentially plane. Thanks to a plane platform, loading of a preferably crawler chassis work machine onto the low trailer takes place safely, as the work machine need not step over a threshold between two separate plane surfaces, such as, for example, when using bridge ramps together with a fixed-frame low trailer.

Advantageously, between the frame included in the low trailer and the drawbar, there is a transverse joint placed in the cross direction of the low trailer and essentially transverse relative to the travel direction of the low trailer, and the low trailer further includes an actuator arranged between the drawbar and the frame for rotating the frame and the platform around the transverse joint relative to the drawbar for adapting the platform of the low trailer between the loading position and the transport position. The use of a transverse joint enables lowering of an essentially planar platform to the ground at one end in a simple way for loading the work machine.

Advantageously, the low trailer includes a dump arm connected to the front part of the frame and the drawbar includes bar beams articulated to the front part of the low trailer frame with a transverse joint for enabling the tilting of the platform relative to the drawbar, and a second dump arm arranged at an angle relative to the plane formed by the A stand construction of the bar beams, wherein said actuator is articulated between said dump arm and second dump arm for tilting the platform relative to the drawbar. With the dump arm and the second dump arm, it is possible to change the direction of the actuator in such a way that it can generate force efficiently for tipping the platform.

Advantageously, the dump arm includes a support plane for supporting the work machine transported on the low trailer, the work machine being a dozer equipped with a shredder, and said support plane is arranged to support the shredder during transport. In this way, the shredder of the dozer can be supported at the same time during transportation so that the shredder does not remain supported by the hydraulic system of the dozer.

The low trailer advantageously includes brakes for braking the low trailer. Thus, all braking force does not rely on the transfer vehicle only.

Advantageously, the low trailer includes a support leg for supporting the low trailer for parking. When using a support leg, connecting and disconnecting the low trailer to and from the tow point of the transfer vehicle is easy to perform by using the actuator of the low trailer for tipping the platform in such a way that, as the drawbar rotates around the transverse joint, the end of the drawbar connecting to the tow point moves in the vertical direction.

Advantageously, the low trailer includes a swing bogie having wheels mounted with bearings on both sides of the low trailer. With the swing bogie, it is possible to improve the carrying capacity of the low trailer while retaining at the same time a good off-road capability of the low trailer.

The object of the method according to the invention can be achieved with a logistic method in a mine or a quarry, wherein material is removed from the soil using work machines, material is moved with articulated frame steered transfer vehicles to each transfer vehicle using a dump bed articulated by means of a dump hinge. Moreover, in the method, arranged at least in part of the transfer vehicles, there is a tow point for a low trailer in the dump hinge of the transfer vehicle's dump bed and a support point at a distance below the tow point for forming a torque support, and the low trailer is fastened to the tow point of the transfer vehicle and the support point while the dump bed is in place using a draw arrangement, wherein the low trailer is fastened to the draw element included in the draw arrangement. Furthermore, in the method, each work machine is moved onboard the low trailer with the transfer vehicle by towing the low trailer.

In the logistic method according to the invention, articulated frame steered transfer vehicles existing in mines or quarries for earth moving are utilised for towing the low trailer. Logistically, a method according to the invention brings a remarkable benefit compared to current methods, since a separate transfer vehicle fleet is not needed for the transfer. On the other hand, work machine transfers from place to place are easy and quick to perform using a low trailer, thus achieving a transfer speed that is many times higher compared to a transfer of a work machine on its own crawler chassis. At the same time, wearing of work machine crawler chassis is reduced. By arranging a tow point for a low trailer in the context of the dump hinge of the dump bed of an articulated frame steered transfer vehicle, the transfer vehicle can still be used for earth moving between low trailer transfers without a modification need between the applications, thus increasing the utilisation rate of transfer vehicles.

Advantageously, the method includes a crawler chassis drill apparatus that is used to drill holes for explosives, explode explosives for extracting material and move the drill apparatuses to a new drilling site using a low trailer. In particular, self-powered transfer of drill apparatuses from a worksite to another is slow and wears the crawler chassis heavily.

Alternatively, the work machine is a bulldozer which is used to push extracted material to the transfer vehicle.

In this context, when referring to articulated frame steered transfer vehicles equipped with a dump bed, transfer vehicles known as mining dumpers (ADT or articulated dump truck) or mine cars used underground in mine galleries, such as mine cars similar to Sandvik Toro TH663i, are advantageously meant. The frame articulation is vertical in the transfer vehicle.

The invention, which is not restricted to the embodiments presented below, is described in more detail by making reference to the enclosed drawings, in which:
- Figure 1a: is a side view of a system according to the invention in a transport position with a work machine onboard a low trailer,
- Figure 1b: is a side view of a system according to the invention in a loading position with a work machine onboard a low trailer,
- Figure 2: is an axonometric diagonal front view of a system according to the invention with an empty low trailer,
- Figure 3a: is a side view of a system according to the invention in a transport position in an empty state,
- Figure 3b: is a top view of a system according to the invention in a transport position in an empty state,
- Figure 4: is a lateral cross sectional view of the structure of a draw arrangement and a drawbar of a low trailer,
- Figure 5: is an axonometric view of a draw arrangement separated,
- Figure 6a: is an axonometric view of a draw arrangement according to a first embodiment in place, fastened to a transfer vehicle,
- Figure 6b: is a rear view of a draw arrangement according to a first embodiment in place, fastened to a transfer vehicle,
- Figure 7: is an axonometric view of a draw arrangement according to a second embodiment in place, fastened to a transfer vehicle,
- Figure 8a: is an axonometric rear and diagonal top view of a low trailer and a draw arrangement according to a third embodiment without a transfer vehicle,
- Figure 8b: is an axonometric rear and diagonal bottom view of a low trailer and a draw arrangement according to a third embodiment without a transfer vehicle,
- Figure 9a: is an axonometric rear and diagonal top view of a low trailer and a draw arrangement according to a third embodiment, fastened to a transfer vehicle,
- Figure 9b: is an axonometric rear and diagonal bottom view of a low trailer and a draw arrangement according to a third embodiment, fastened to a transfer vehicle.

In the figures, reference is made to the different parts of the invention using the following reference numbers:
- 10: system
- 12: crawler chassis
- 13: work machine
- 14: drill apparatus
- 16: transfer vehicle
- 18: dump hinge
- 20: dump bed
- 21: transverse pivot shaft
- 22: low trailer
- 24: tow point
- 25: platform
- 26: drawbar
- 27: bar beams
- 28: draw arrangement
- 29: A stand construction
- 30: lugs
- 31: support point
- 32: tow plate
- 33: draw element
- 34: tow ball
- 35: draw construction
- 36: pivot pin
- 37: toothing
- 38: towing block
- 40: torque arm
- 42: locking hole
- 44: locking pin
- 46: frame
- 47: frame front part
- 48: transverse joint
- 50: actuator
- 52: brakes
- 54: support leg
- 56: ball hitch
- 58: sliding surfaces
- 60: swing bogie
- 62: wheels
- 64: leg
- 66: curved section
- 68: conical section
- 70: openings
- 72: frame articulation
- 74: transfer vehicle frame
- 75: lug for dump hinge
- 76: dump lugs
- 78: dump arm
- 80: second dump arm
- 82: articulation of swing bogie
- 84: fastening pin
- 85: framework structure
- 86: pintle hook
- 88: towing eyelet
- 90: support plane
- 92: locking flange.

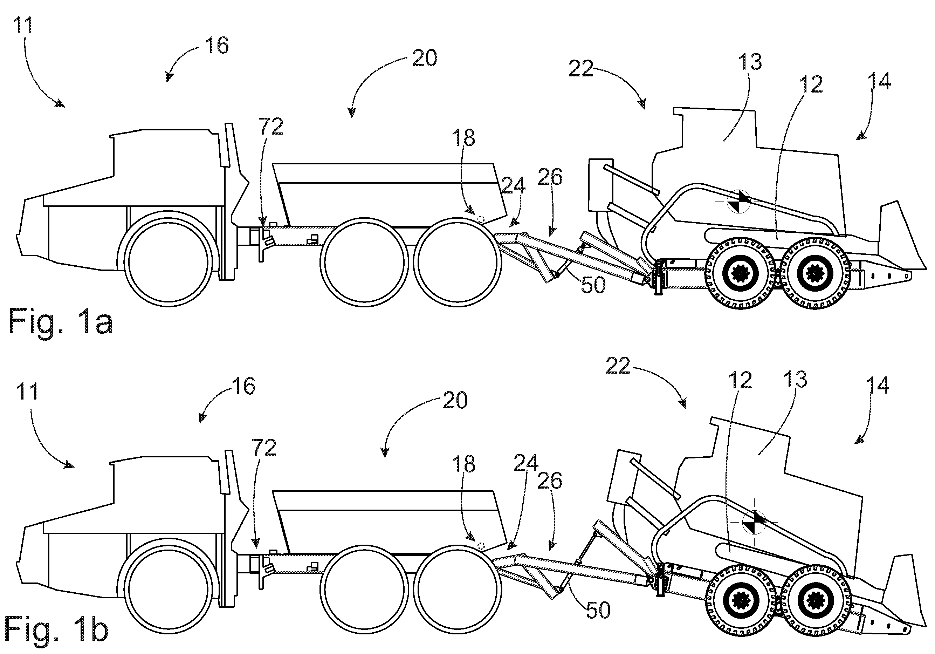

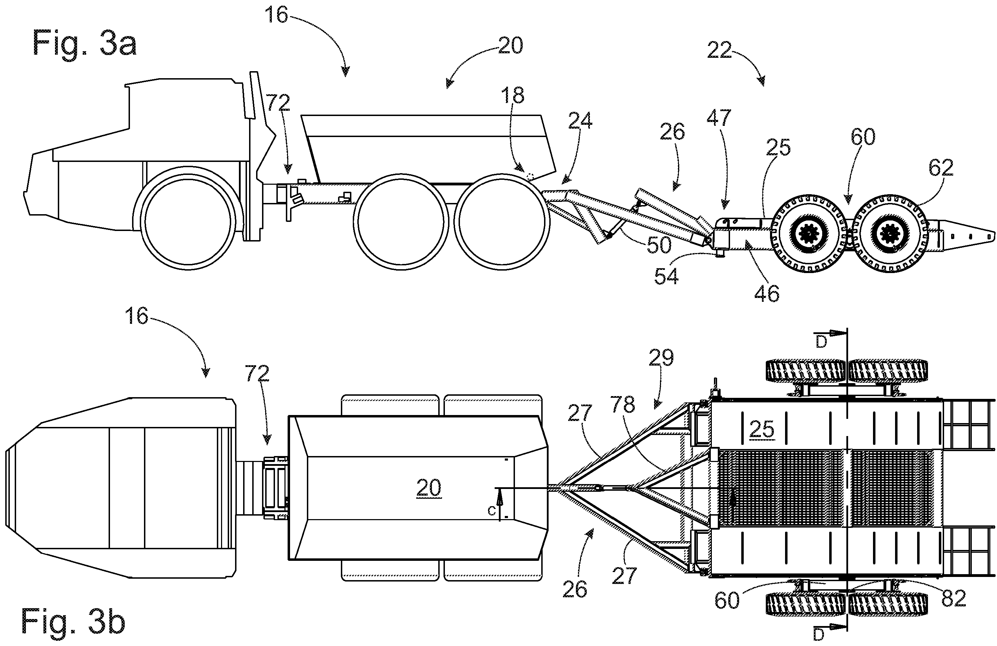

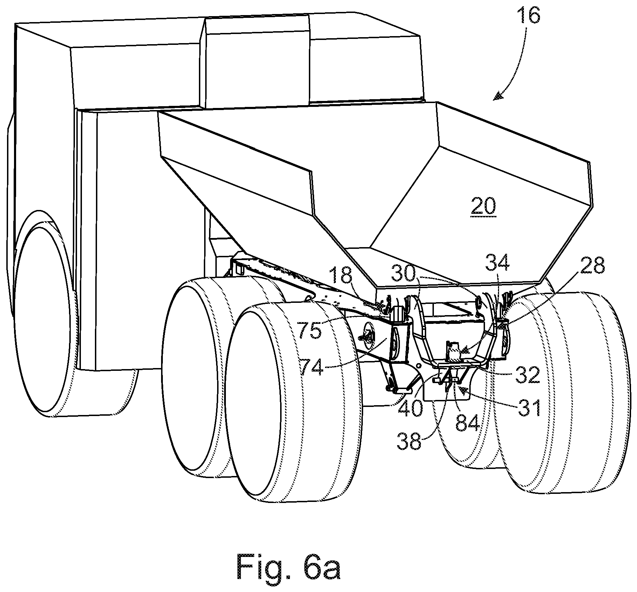

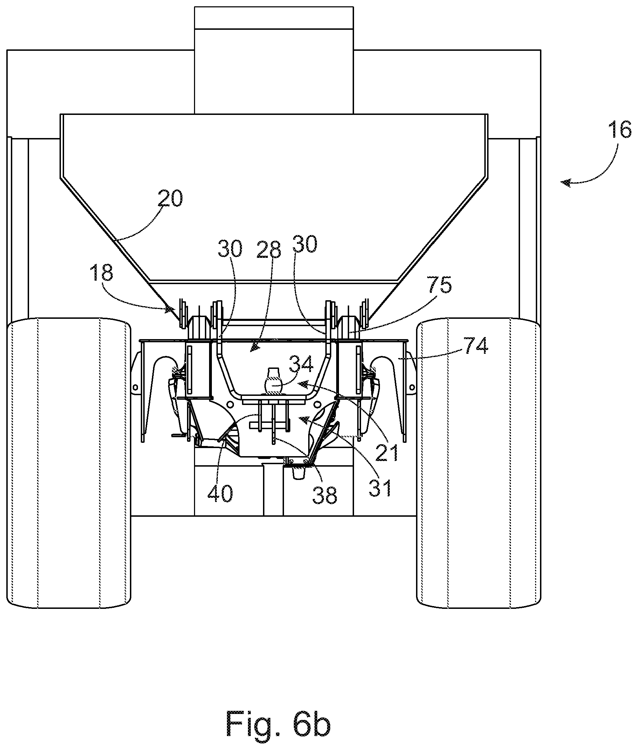

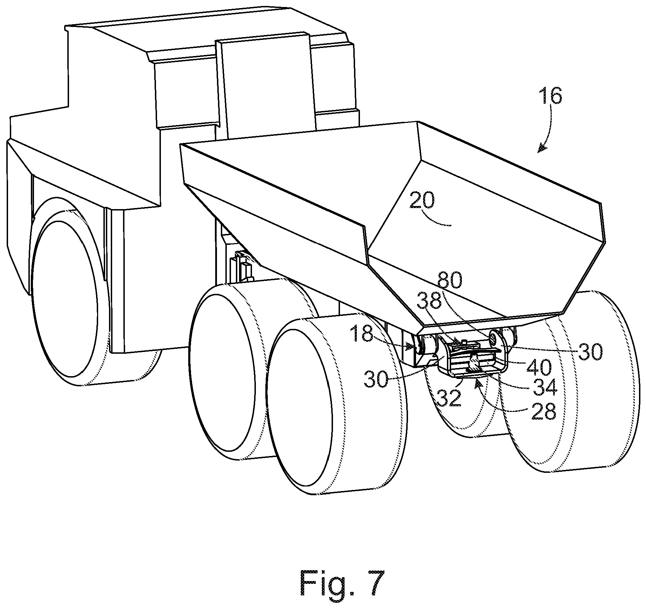

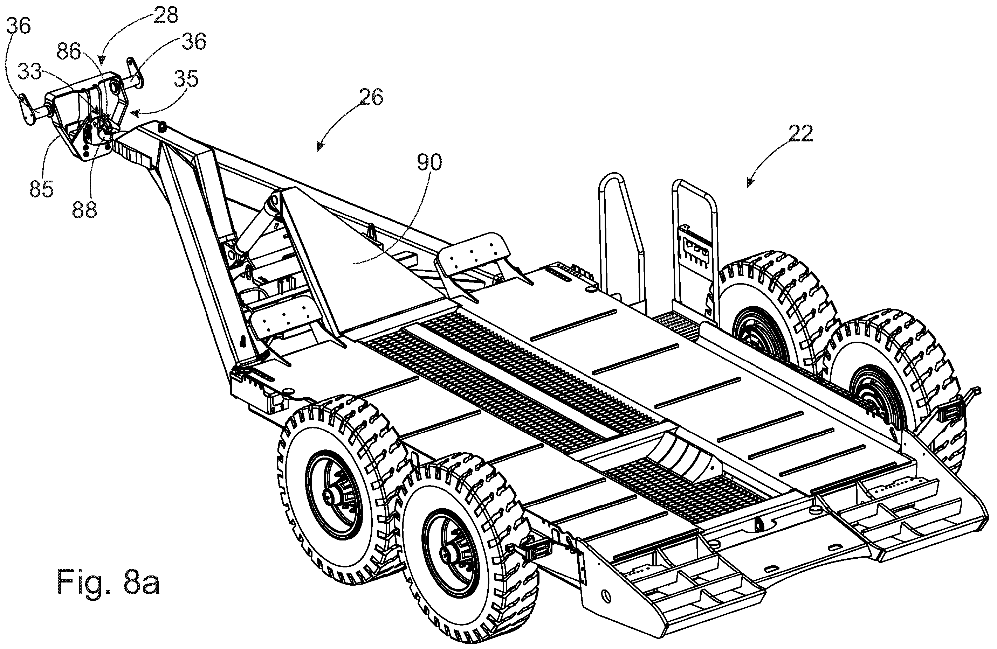

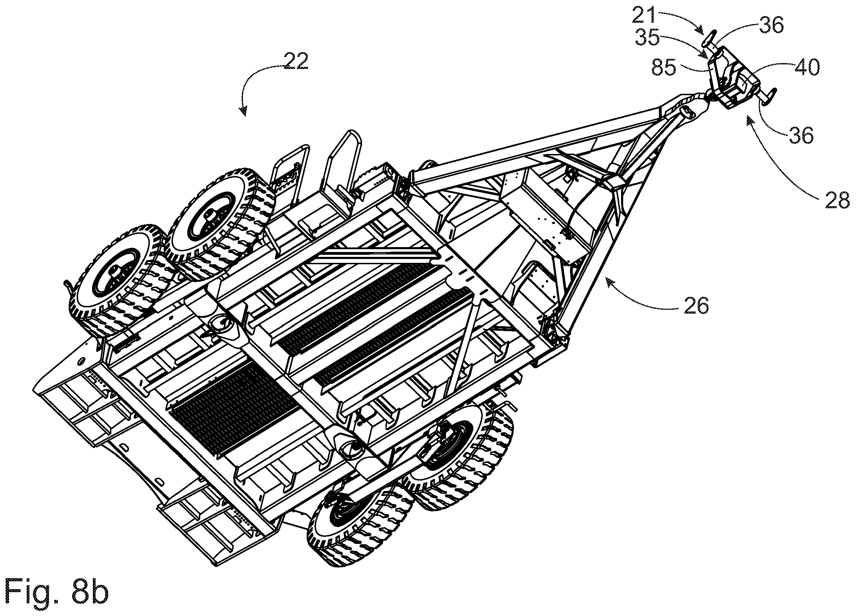

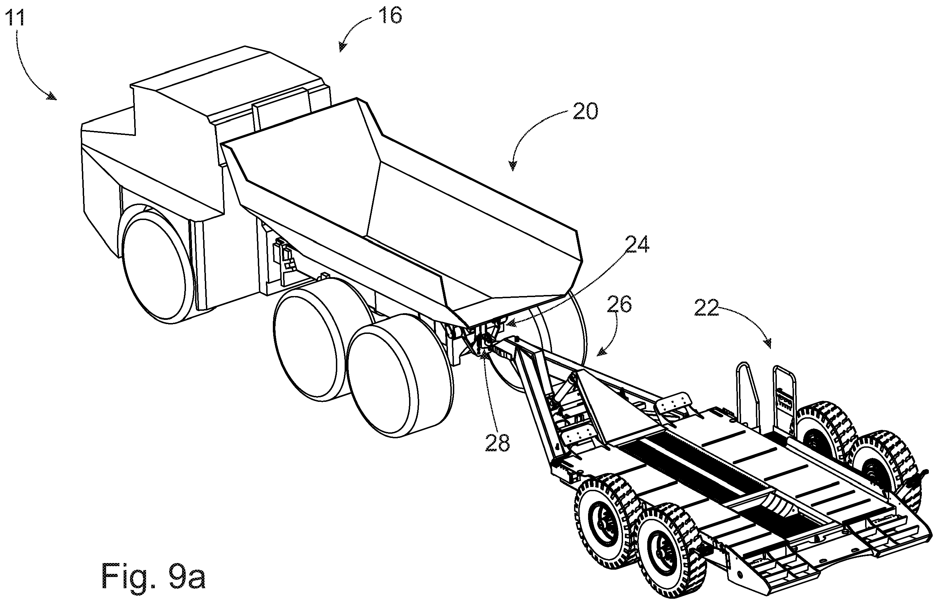

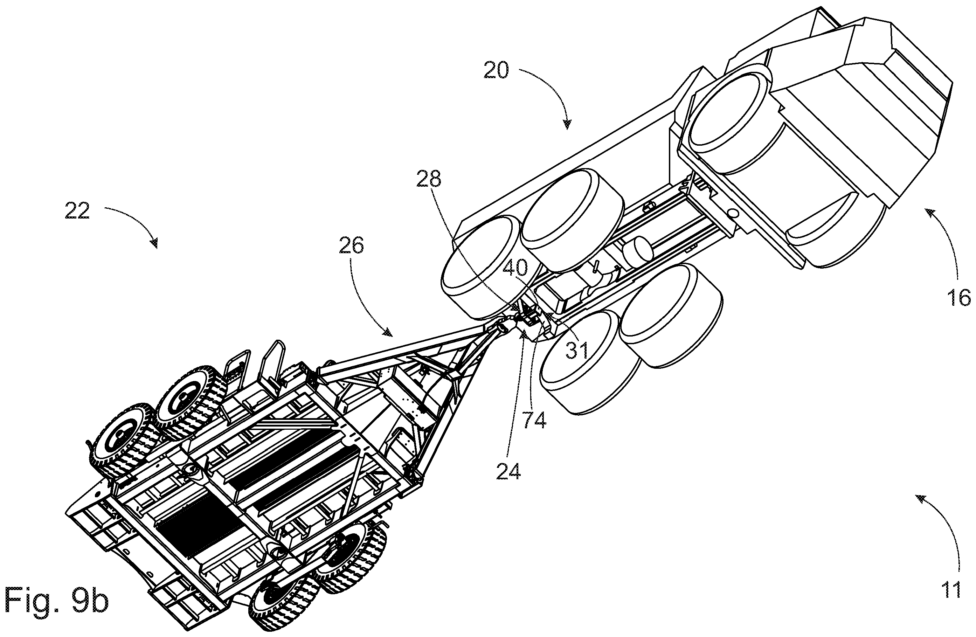

In the implementation examples shown in Figures 1 - 9b, the transfer vehicle 16 used in a system 11 according to the invention is a dumper steered by means of a vertical frame articulation 72 (in Figure 3a), also known as ADT. Figures 6a and 6b illustrate a draw arrangement 28 according to a first embodiment preferably included in the system 11 according to the invention in the context of a transfer vehicle 16 according to a first embodiment, whereas Figure 7 illustrates it in the context of a transfer vehicle 16 according to a second embodiment. Figures 8a - 8b show a third embodiment of the draw arrangement 28. In the embodiment shown in Figures 1a and 1b, the work machine 13 moved with the low trailer 22 is a crawler chassis 12 drill apparatus 14, but it is to be understood that the work machine moved can also be other, for example, a work machine equipped with wheels, a broken work machine or, for example, a crawler chassis excavator, dozer or other similar work machine used in a mine or a quarry. For broken work machines, the low trailer may include a winch for pulling the work machine onto the low trailer.

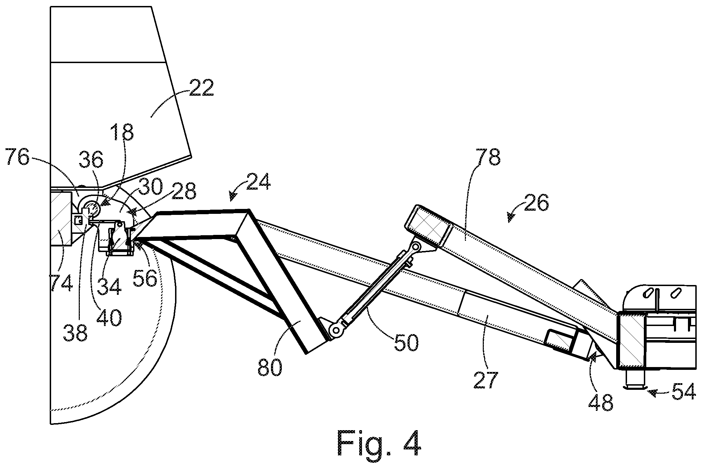

According to Figures 1a - 3b, a system 11 according to the invention includes as basic components a transfer vehicle 16 steered by means of a frame articulation 72 and equipped with a dump bed 20 having an engine for moving the transfer vehicle in a self-propelled manner. According to Figure 4, the dump bed 20 is fastened to the frame 74 of the transfer vehicle 16, to a dump hinge 18 composed of dump lugs 76 fastened to the frame 74 and pivot pins 36 that go through the openings in the dump lugs 76. In addition, the system 11 according to the invention includes a low trailer 22 which is used to move a work machine 13 by towing with the transfer vehicle 16. Thus, the low trailer does not include an engine of its own, but the low trailer must be towed when moving it. According to Figures 3a and 3b, the low trailer 22 includes a frame 46 having wheels 62 articulated thereto preferably by means of a swing bogie 60, arranged on both sides of a preferably essentially plane platform 25 arranged on the frame 46. In addition, fastened to the front part of the low trailer 22 frame 46, there is a drawbar 26 which includes, in a first embodiment, a ball hitch 56 shown in Figure 4 for fastening the drawbar 26 to a tow point 24 formed in the transfer vehicle 16.

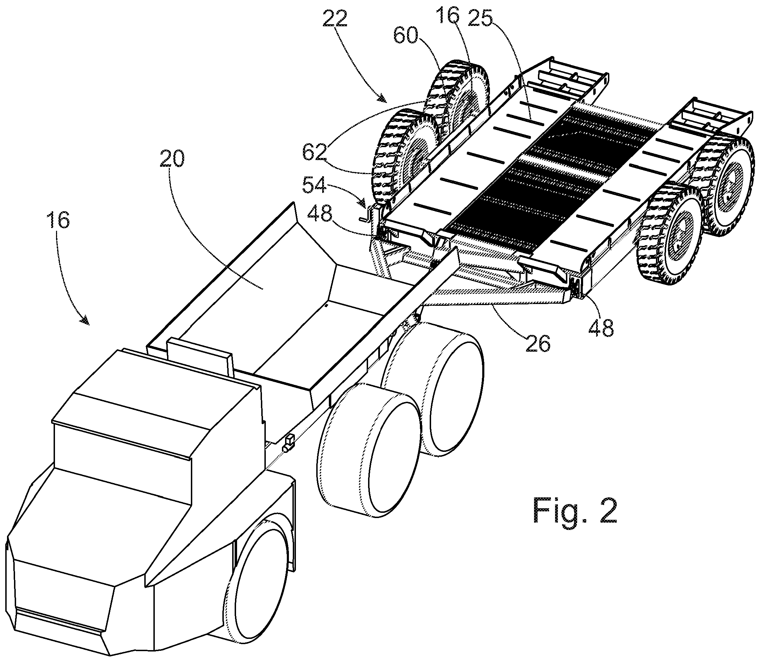

According to Figure 4, the drawbar 26 is advantageously fastened to the front part 47 of the low trailer 22 frame 46 by its bar beams 27 by means of a transverse joint 48. Also, the transverse joint 48 shown in Figure 2 enables tilting the platform 25 relative to the drawbar 26 for tilting the platform 25 between a transport position shown in Figures 1a and 3a and a loading position shown in Figure 1b. In order to achieve optimal lever of force produced by a hydraulic or a pneumatic cylinder that preferably functions as the actuator 50, connected to the front part 47 of the low trailer 22 frame 46, there is a dump arm 78 and, correspondingly, a second dump arm 80 diverging from the A stack construction 29 that forms the drawbar 26. Advantageously, the dump arm 78 is at an angle relative to the plane formed by the platform 25, and also the second dump arm 80 is at an angle relative to the plane formed between the A stand construction 29 of the drawbar 26. In this way, the actuator 50 can be advantageously arranged at a larger angle relative to the dump arm 78 and the second dump arm 80 with the angle exceeding 70° in all of the positions of the actuator 50. The dump arm 78 may also be a structure made with a form of an A stand according to Figure 3b to ensure that it is sufficiently strong to resist forces applied to it during the loading of the low trailer.

Advantageously, according to Figure 1b, the platform 25 is tiltable by means of the actuator 50 around the articulation 82 of the swing bogie 60 shown in Figure 3b in such a way that the other end of the platform 25 contacts the base for loading the work machine. Thus, the work machine 13 can be safely driven onto the low trailer 22, as the platform 25 is preferably essentially plane and does not form a threshold for the work machine to step over.

Figure 4 also shows a support leg 54 that is preferably included at the end of the low trailer 22 frame 46. It is also possible to provide two support legs 54, one on both sides of the low trailer. The purpose of the support leg 54 is to support the drawbar 26 of the low trailer 22 off the base when the low trailer is not connected to the transfer vehicle 16. The support leg 54 can also be used to facilitate the disconnection of the low trailer 22 from the tow point 24 of the transfer vehicle 16. This takes place in such a way that, prior to disconnecting the drawbar 26 from the tow point 24, the support leg 54 is extended to such a length that it supports the low trailer 22 frame 46 onto the base. After this, by extending the actuator 50, the second dump arm 80 rotates the drawbar 26 around the transverse joint 48 causing the ball hitch 56 of the drawbar 26 to rise upwards and off the tow point 24. For example, the support leg used may be a lowerable support leg known from the context of truck semitrailers in the road traffic use, such as, for example, a support leg manufactured by a company called Jost International marketed with the name Jost Standard A400 Series landing gear.

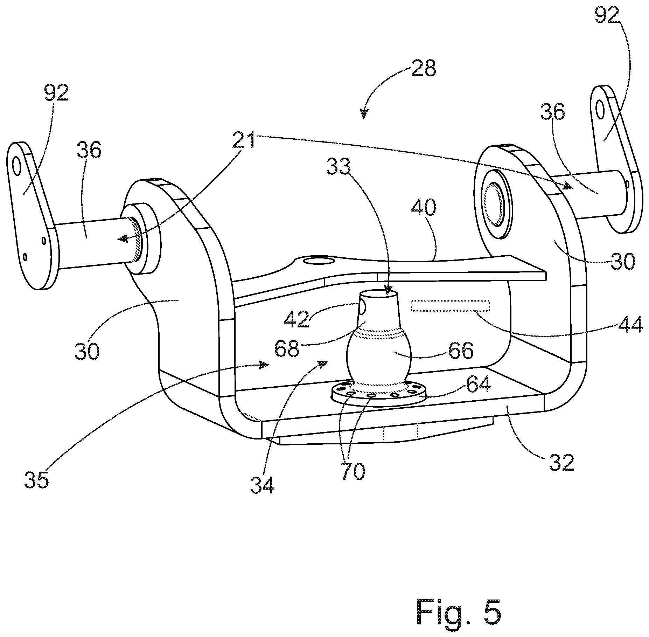

The tow point 24 is advantageously formed in the context of the dump hinge 18 of the dump bed 20 of the transfer vehicle 16 by using a draw arrangement 28, a first embodiment of which is shown separated in Figure 5. The main components of the draw arrangement 28 include a draw element 33, lugs 30 to be fastened to the dump hinge 18, a draw construction 35 connecting the lugs 30. In a first embodiment, the draw arrangement 28 includes a tow plate 32 and a tow ball 34 functioning as the draw element 33 and formed in the tow plate 32. Advantageously, the draw arrangement 28 also includes a torque arm 40, which can be fastened, for example, according to a first embodiment, to a support point 31 of the transfer vehicle 16, which in this case is the towing block 38 shown in Figures 6a - 7. A towing block 38 is generally a standard component in the rear part of all articulated frame steered transfer vehicles for towing transfer vehicles rearwards in case the transfer vehicle is stuck on a soft surface, for example. The purpose of the torque arm 40 is to prevent the draw arrangement from swinging around the dump hinge during the transfer drive.

The only modifications that are necessary in the transfer vehicle for fastening the draw arrangement are the pivot pins 36 of Figure 5, which must be replaced with longer ones in order that the lugs 30 of the draw arrangement 28 can be fastened onto the extensions of the pivot pins 36. Figure 5 shows a draw arrangement 28 and extended pivot pins 36, which also have locking flanges 92 for the pivot pins fastened thereto. The pivot pins 36 are locked non-rotatably to the transfer vehicle frame with the locking flanges 92. On the other hand, a hydraulic power take-off must be provided in the transfer vehicle for brakes preferably included in the low trailer as well as a tapping point of electricity for the lights and preferably a DC hydraulic unit of the low trailer. Advantageously, the actuator of the low trailer is operated by means of a DC hydraulic unit included in the low trailer to produce the hydraulic power necessary for operating the actuator. For example, the hydraulic unit used may be a unit known from trucks in the road traffic use, for instance, a tail lift unit of the manufacturer called ZEPRO known by the product name Unit7400. On the low trailer, the hydraulic unit can be located on the side of the frame, for example, essentially above the bottom surface of the frame where it cannot hit the ground and, on the other hand, does not reduce the space available for the work machine transported. The tilting control of the low trailer can be performed with a terminal device separate from the transfer vehicle, which controls a valve unit included in the hydraulic unit for supplying hydraulic fluid to the actuator.

According to a first embodiment, a tow ball 34 deviating from a conventional tow ball for its design is used in the draw arrangement according to the invention. The tow ball 34 advantageously includes a leg 64 comprising openings 70 for locking the legs to a tow plate or a counter plate located on the other side of it using bolts, for example. Fastened to the leg 64, there is a barrel-shaped curved section 66 having a curved surface. The curved surface may be, for example, a surface with a radius of curvature ranging between R60 and R100, preferably R80. The curved section 66 enables the rotation of the drawbar around both the vertical axis and the transverse axis when the low trailer moves conforming to the surface. Advantageously, the ball hitch 56 includes, according to Figure 4, sliding surfaces 58, against which the curved section 66 of the tow ball 34 is supported. Fastened to the curved section 66, there is a narrowing conical section 68, the purpose of which is to facilitate positioning of the ball hitch of the drawbar in the tow ball 34. An upwardly narrowing tapered structure facilitates the positioning of a ball hitch in the tow ball, being loose relative to this. Advantageously, the conical section 68 includes a locking hole 42, through which a locking pin 44 is inserted after connecting the ball hitch for preventing that the ball hitch is lifted out from the tow ball 34. Thus, a separate locking mechanism is not needed in the drawbar to lock the drawbar to the tow ball, instead, this function is performed by the locking hole and pin.

Advantageously, the lugs 30 of the draw arrangement 28 hang the tow ball 34 with its back downwards from the plane of the dump hinge 18, according to Figures 6a - 7. The purpose of this is to achieve a sufficiently long distance between the tow ball 34 and the dump bed 20 so that the draw arrangement 28 can be continuously in place in the transfer vehicle even during material transportation carried out with the dump bed between work machine transfers carried out with the low trailer. A sufficiently long distance is necessary particularly when tipping the dump bed, where the edge of the dump bed moves notably lower. Another reason for the lug shape is that in dumpers, for example, rear lights are generally located in the context of the dump hinge, at the centre of the frame so that a tow ball fitted directly between the pivot pins of the dump hinge would cover the rear lights of the dumper.

Figures 6a and 6b illustrate a first embodiment of the draw arrangement 28 in the context of a first transfer vehicle model. In this case, the towing block 38 is a vertical lug having an opening in the centre. In this case, two torque arms fastened to the tow plate 32, locked to the towing block 38 with a separate fastening pin 84 function as the torque arm 40 of the draw arrangement 28. In a second embodiment of Figure 7, the torque arm 40 of the draw arrangement 28 is formed between the lugs 30 and the torque arm 40 extends again this time within a gap-like towing lug 38, to which it is locked with a fastening pin 84. In both cases, the purpose of the torque arm is to lock the draw arrangement in place in such a way that it cannot swing around the pivot pins 36 during driving.

Figures 8a - 9b illustrate a third embodiment of the draw arrangement 28, wherein the draw arrangement 35 includes a framework structure 85, pivot pins 36 connected thereto and a pintle hook 86, fastened to the framework structure 85, which functions as the draw element 33. The drawbar 26 of the low trailer 22 includes in this case a towing eyelet 88, which is advantageously articulated to the drawbar 26 in the longitudinal axis of the low trailer enabling the rotation of the towing eyelet 88 around the axis. This, in turn, enables the tilting of the low trailer around its longitudinal axis according to surface contours. In this embodiment, the torque arm 40 leans to the transfer vehicle 16 frame 74, preferably to its lower surface, preventing the rotation of the draw arrangement around the dump hinge 18 of the dump bed 20. In other words, the frame 74 forms the support point of the transfer vehicle 16. Advantageously, the torque arm includes a clamping flange, which is used to tighten the torque arm against the transfer vehicle frame. The pintle hook used can be a commercially existing pintle hook, for example, a pintle hook manufactured with the product name R-75 Ton Pintle Hook by US Wallace Forge Company, and the towing eyelet, in turn, can be a product marketed by the same company with the name 3" Swivel Drawbar.

Advantageously, the length of the low trailer according to the invention ranges from 3 to 8 m, width from 3 to 6 m and height from 50 to 100 cm. The diameter of the wheel used may be between 80 and 150 cm. The own weight of the low trailer bay be between 5 and 20 tons, 8 to 12 tons, and the low trailer can be meant for transferring work machines preferably with a weight ranging from 5 to 50 tons, preferably from 10 to 30 tons. In this case, as brakes for the low trailer, it is possible to use dry drum brakes known from truck trailers, connected to the service brake of the transfer vehicle, and the swing bogie may be equipped with truck hubs for fastening the wheels to the swing bogie. Brakes can be operated with hydraulic cylinders.

A system according to the invention is advantageously used in a logistic method for transferring both material and work machines with a low trailer using an articulated frame steered transfer vehicle. The idea of the logistic method is to use the same transfer vehicle simultaneously for both material transfer and work machine transfer from a worksite to another with a transfer vehicle using a towed low trailer. Advantageously, the articulated frame steered transfer vehicle is a dumper, which are generally not equipped with a draw hook or a possibility for towing low trailers or trailers. Now, in the system according to the invention, the tow point is formed in the dump hinge of the dump bed.

At its simplest, the invention could be applied in a system which includes an articulated frame steered transfer vehicle comprising a dump bed articulated with a dump hinge and a tow point, which is formed in the pivot point of the dump bed of the transfer vehicle, and the system further includes a low trailer comprising a platform for supporting a work machine on the low trailer during transfer and a drawbar for fastening the low trailer to the tow point for towing the low trailer with the transfer vehicle.

## Claims

1. A system (11) for transferring a crawler chassis (12) work machine (13), wherein the system (11) includes
- a transfer vehicle (16) comprising a tow point (24),
- a low trailer (22) comprising a platform (25) for supporting the work machine (13) onboard the low trailer (22) during transfer and a drawbar (26) for fastening the low trailer (22) pivotally to the tow point (24) for towing the low trailer (22) with the transfer vehicle (16), wherein the transfer vehicle (16) is frame steered and comprises at least one dump hinge (18) implemented with a transverse pivot shaft (21), **characterized by** a dump bed (20) articulated with the dump hinge (18), and a support point (31) placed at a distance below the dump hinge (18), and the system further includes a draw arrangement (28) supported to the pivot shaft (21) and the support point (31) non-rotatably with a torque arm (40) included in the draw arrangement (28), wherein the draw arrangement (28) includes a draw element (33) for connecting the low trailer (22) to the transfer vehicle (16) with the draw arrangement (28).

2. A system according to Claim 1, **characterised in that** the tow point (24) is formed in the dump hinge (18) of the dump bed (20) of the transfer vehicle (16).

3. A system according to Claim 1 or 2, **characterised in that** the draw arrangement (28) includes lugs (30) for hanging the draw element (33) below the transverse pivot shaft (21) of the dump hinge (18) and a draw construction (35) formed between the lugs (30), the draw construction (35) including the draw element (33).

4. A system according to Claim 3, **characterised in that** the transverse pivot shaft (21) is composed of two pivot pins (36) onto the extensions of which the lugs (30) are fastened.

5. A system according to any of Claims 1 to 4, **characterised in that** the support point (31) is part of the frame (74) of the transfer vehicle (16).

6. A system according to any of Claims 1 to 5, **characterised in that** the support point (31) is a towing block (38) included in the transfer vehicle (16) for supporting the torque arm (40) to the transfer vehicle (16), and the draw arrangement (35) includes a tow plate (32) and the draw element (33), which is a tow ball (34), formed in the tow plate (32).

7. A system according to Claim 6, **characterised in that** the tow ball (34) includes a locking hole (42) and a locking pin (44) going through the locking hole (42) for locking the drawbar (26) of the low trailer (22) to the tow point (24).

8. A system according to any of Claims 6 or 7, **characterised in that** the tow ball (34) includes
- a leg (64) for fastening the tow ball (34) to the tow plate (32),
- a curved section (66) fastened to the leg (64) enabling the turning of the low trailer (22) around the horizontal and vertical axis relative to the tow point (24),
- a narrowing conical section (68) connected to the curved section (66) for facilitating the connection of the drawbar (26),
- a locking hole (42) formed in the conical section (68), and
- a locking pin (44) arranged through the locking hole (42) for locking the drawbar (26) to the tow ball (34).

9. A system according to any of Claims 6 to 8, **characterised in that** the drawbar (26) of the low trailer (22) includes a ball hitch (56), which comprises sliding surfaces (58) that are arranged to receive both vertical and horizontal loads and enable both rotational and turning movements.

10. A system according to any of Claims 3 to 5, **characterised in that** the draw arrangement (35) includes a framework structure (85) and the draw element (33) connected to the framework structure (85), wherein the draw element (33) is a pintle hook (86), and the drawbar (26) includes a towing eyelet (88) for fastening the low trailer (22) to the pintle hook (86) .

11. A system according to Claim 10, **characterised in that** the torque arm (40) is arranged to lean on the frame (74) of the transfer vehicle (16).

12. A system according to any of Claims 1 to 11, **characterised in that** between the frame (46) included in the low trailer (22) and the drawbar (26), there is a transverse joint (48) placed in the cross direction of the low trailer (22) and essentially transverse relative to the travel direction of the low trailer (22), and the low trailer (22) further includes an actuator (50) arranged between the drawbar (26) and the frame (46) for rotating the frame (46) and the platform (25) around the transverse joint (48) relative to the drawbar (26) for adapting the low trailer (22) between the loading position and the transport position.

13. A system according to Claim 12, **characterised in that** the low trailer (22) includes a dump arm (78) connected to the front part (47) of the frame (46) and the drawbar (26) includes bar beams (27) articulated to the front part (47) of the low trailer (22) frame (46) with the transverse joint (48) for enabling the tilting of the platform (25) relative to the drawbar (26), and a second dump arm (80) arranged at an angle relative to the plane formed by the A stand construction (29) of the bar beams (27), wherein the actuator (50) is articulated between the dump arm (78) and second dump arm (80) for tilting the platform (25) relative to the drawbar (26).

14. A system according to any of Claims 2 to 13, **characterised in that** the draw arrangement (28) additionally includes extended pivot pins (36), with which the dump bed (20) and the draw arrangement (28) are simultaneously fastened to the pivot point (18) of the dump bed (20).

15. A logistic method in a mine or a quarry, where the method is used to
- extract material from the soil with work machines (13),
- move material with articulated frame steered transfer vehicles (16) to each transfer vehicle (16) using a dump bed (20) articulated by means of a dump hinge (18),
- move work machines (13) to a new worksite using a low trailer (22),
wherein in the method,
- arranged at least in part of said transfer vehicles (16), there is a tow point (24) for the low trailer (22) in the pivot point (18) of the dump bed (20) of the transfer vehicle (16) as well as a support point (31) at a distance below the tow point (24) for forming a torque support, **characterized in that**,
- the low trailer (22) is fastened to the tow point (24) of the transfer vehicle (16) and the support point (31) while the dump bed (20) is in place using a draw arrangement (28), wherein the low trailer (22) is fastened to a draw element (33) included in the draw arrangement (28), and
- each work machine (13) is moved onboard the low trailer (22) by towing the low trailer (22) with the transfer vehicle (16).

## Patentansprüche

1. System (11) zum Bewegen einer Arbeitsmaschine (13) auf einem Raupenfahrwerk (12), wobei das System (11) einschließt:
- ein Transportfahrzeug (16), dass einen Anhängepunkt (24) umfasst,
- einen Tieflader (22), der eine Ladefläche (25) zum Aufnehmen der Arbeitsmaschine (13) auf dem Tieflader (22) während des Transports und eine Deichsel (26) zum schwenkbaren Befestigen des Tiefladers (22) am Anhängepunkt (24) umfasst, um den Tieflader (22) mit dem Transportfahrzeug (16) zu ziehen, wobei das Transportfahrzeug (16) rahmengelenkt ist und mindestens ein Kippgelenk (18) umfasst, das mit einer quer verlaufenden Schwenkwelle (21) implementiert ist, **gekennzeichnet durch** eine Kippmulde (20), die mit dem Kippgelenk (18) angelenkt ist, und einen Stützpunkt (31), der in einem Abstand unterhalb des Kippgelenks (18) angeordnet ist, und das System ferner eine Zuganordnung (28) einschließt, die an der Schwenkwelle (21) und dem Stützpunkt (31) über einen in der Zuganordnung (28) eingeschlossenen Drehmomentarm (40) drehfest gelagert ist, wobei die Zuganordnung (28) ein Zugelement (33) einschließt, um den Tieflader (22) mittels der Zuganordnung (28) mit dem Transportfahrzeug (16) zu verbinden.

2. System nach Anspruch 1, **dadurch gekennzeichnet, dass** der Anhängepunkt (24) im Kippgelenk (18) der Kippmulde (20) des Transportfahrzeugs (16) ausgebildet ist.

3. System nach Anspruch 1 oder 2, **dadurch gekennzeichnet, dass** die Zuganordnung (28) Laschen (30) zum Einhängen des Zugelements (33) unterhalb der quer verlaufenden Schwenkwelle (21) des Kippgelenks (18) sowie eine zwischen den Laschen (30) ausgebildete Zugkonstruktion (35) einschließt, wobei die Zugkonstruktion (35) das Zugelement (33) einschließt.

4. System nach Anspruch 3, **dadurch gekennzeichnet, dass** die quer verlaufende Schwenkwelle (21) aus zwei Schwenkbolzen (36) besteht, an deren Verlängerungen die Laschen (30) befestigt sind.

5. System nach einem der Ansprüche 1 bis 4, **dadurch gekennzeichnet, dass** der Stützpunkt (31) Teil des Rahmens (74) des Transportfahrzeugs (16) ist.

6. System nach einem der Ansprüche 1 bis 5, **dadurch gekennzeichnet, dass** der Stützpunkt (31) ein im Transportfahrzeug (16) eingeschlossener Anhängeblock (38) ist, um den Drehmomentarm (40) am Transportfahrzeug (16) abzustützen, und die Zuganordnung (35) eine Anhängeplatte (32) und das in der Anhängeplatte (32) ausgebildete Anhängeelement (33), bei dem es sich um eine Anhängekugel (34) handelt, einschließt.

7. System nach Anspruch 6, **dadurch gekennzeichnet, dass** die Anhängekugel (34) ein Sicherungsloch (42) und einen durch das Sicherungsloch (42) hindurchgehenden Sicherungsstift (44) zum Sichern der Deichsel (26) des Tiefladers (22) am Anhängepunkt (24) einschließt.

8. System nach Anspruch 6 oder 7, **dadurch gekennzeichnet, dass** die Anhängekugel (34) Folgendes einschließt:
- einen Schenkel (64) zum Befestigen der Anhängekugel (34) an der Anhängeplatte (32),
- einen gekrümmten Abschnitt (66), der an dem Schenkel (64) befestigt ist und das Drehen des Tiefladers (22) um die horizontale und vertikale Achse relativ zum Anhängepunkt (24) ermöglicht,
- einen sich verjüngenden konischen Abschnitt (68), der mit dem gekrümmten Abschnitt (66) verbunden ist, um das Anschließen der Deichsel (26) zu erleichtern,
- ein Sicherungsloch (42), das im konischen Abschnitt (68) ausgebildet ist, und
- einen Sicherungsstift (44), der durch das Sicherungsloch (42) hindurch angeordnet ist, um die Deichsel (26) an der Anhängekugel (34) zu sichern.

9. System nach Anspruch 6 bis 8, **dadurch gekennzeichnet, dass** die Deichsel (26) des Tiefladers (22) eine Kugelkupplung (56) einschließt, die Gleitflächen (58) umfasst, die so angeordnet sind, dass sie sowohl vertikale als auch horizontale Belastungen aufnehmen und sowohl Dreh- als auch Schwenkbewegungen ermöglichen.

10. System nach einem der Ansprüche 3 bis 5, **dadurch gekennzeichnet, dass** die Zuganordnung (35) eine Rahmenkonstruktion (85) und das mit der Rahmenkonstruktion (85) verbundene Zugelement (33) einschließt, wobei das Zugelement (33) eine Hakenkupplung (86) ist, und die Deichsel (26) eine Anhängeöse (88) zum Befestigen des Tiefladers (22) an der Hakenkupplung (86) einschließt.

11. System nach Anspruch 10, **dadurch gekennzeichnet, dass** der Drehmomentarm (40) so angeordnet ist, dass er sich auf den Rahmen (74) des Transportfahrzeugs (16) stützt.

12. System nach einem der Ansprüche 1 bis 11, **dadurch gekennzeichnet, dass** zwischen dem im Tieflader (22) eingeschlossenen Rahmen (46) und der Deichsel (26) ein Quergelenk (48) angeordnet ist, das in Querrichtung des Tiefladers (22) und im Wesentlichen quer zur Fahrtrichtung des Tiefladers (22) verläuft, und der Tieflader (22) ferner einen zwischen der Deichsel (26) und dem Rahmen (46) angeordneten Aktuator (50) einschließt, um den Rahmen (46) und die Ladefläche (25) um das Quergelenk (48) relativ zur Deichsel (26) zu drehen, um den Tieflader (22) zwischen der Ladeposition und der Transportposition anzupassen.

13. System nach Anspruch 12, **dadurch gekennzeichnet, dass** der Tieflader (22) einen Kipparm (78) einschließt, der mit dem vorderen Teil (47) des Rahmens (46) verbunden ist, und die Deichsel (26) Stangenbalken (27), die am vorderen Teil (47) des Rahmens (46) des Tiefladers (22) über das Quergelenk (48) angelenkt sind, um das Kippen der Ladefläche (25) relativ zur Deichsel (26) zu ermöglichen, und einen zweiten Kipparm (80), der in einem Winkel relativ zu der durch die A-förmige Stützkonstruktion (29) der Stangenbalken (27) ausgebildeten Ebene angeordnet ist, einschließt, wobei der Aktuator (50) zwischen dem Kipparm (78) und dem zweiten Kipparm (80) angelenkt ist, um die Ladefläche (25) relativ zur Deichsel (26) zu kippen.

14. System nach einem der Ansprüche 2 bis 13, **dadurch gekennzeichnet, dass** die Zuganordnung (28) zusätzlich verlängerte Schwenkbolzen (36) einschließt, mit denen die Kippmulde (20) und die Zuganordnung (28) gleichzeitig am Drehpunkt (18) der Kippmulde (20) befestigt sind.

15. Logistikverfahren in einem Bergbau oder einem Steinbruch, wobei das Verfahren dazu dient
- Material mit Arbeitsmaschinen (13) aus dem Boden zu fördern,
- Material mit rahmengelenkten Transportfahrzeugen (16) unter Verwendung einer mittels eines Kippgelenks (18) angelenkten Kippmulde (20) zu jedem Transportfahrzeug (16) zu befördern,
- Arbeitsmaschinen (13) unter Verwendung eines Tiefladers (22) zu einem neuen Einsatzort zu befördern,
wobei bei dem Verfahren,
- mindestens an einem Teil des Transportfahrzeugs (16) ein Anhängepunkt (24) für den Tieflader (22) am Drehpunkt (18) der Kippmulde (20) des Transportfahrzeugs (16) sowie ein Stützpunkt (31) in einem Abstand unterhalb des Anhängepunkts (24) zum Ausbilden einer Drehmomentabstützung angeordnet sind, **dadurch gekennzeichnet, dass**
- der Tieflader (22) am Anhängepunkt (24) des Transportfahrzeugs (16) und am Stützpunkt (31) befestigt wird, während sich die Kippmulde (20) in ihrer Position befindet, und zwar unter Verwendung einer Zuganordnung (28), wobei der Tieflader (22) an einem in der Zuganordnung (28) eingeschlossenen Zugelement (33) befestigt wird, und
- jede Arbeitsmaschine (13) durch Ziehen des Tiefladers (22) mit dem Transportfahrzeug (16) auf den Tieflader (22) verladen wird.

## Revendications

1. Système (11) permettant de déplacer une machine de travail (13) à châssis à chenilles (12), où le système (11) comprend
- un véhicule de transfert (16) avec un point de remorquage (24),
- une remorque à plateau bas (22) dotée d'une plateforme (25) pour supporter la machine de travail (13) montée sur la remorque à plateau bas (22) pendant le transfert et une flèche d'attelage (26) pour fixer la remorque à plateau bas (22) de manière articulée au point de remorquage (24) en vue du tractage de la remorque à plateau bas (22) à l'aide du véhicule de transfert (16), lequel véhicule de transfert (16) comprend des essieux directeurs sur châssis et au moins une charnière de basculement (18) dotée d'un arbre pivot transversal (21), **caractérisé en ce qu'**une benne basculante (20) est montée sur la charnière de basculement (18), et qu'un point d'appui (31) est situé à une certaine distance sous la charnière de basculement (18), et le système comprend en outre un dispositif d'attelage (28) fixé sans possibilité de rotation à l'arbre pivot (21) et au point d'appui (31) avec un bras de torsion (40) inclus dans le dispositif d'attelage (28), où le dispositif d'attelage (28) comprend un élément d'attelage (33) destiné à relier la remorque à plateau bas (22) au véhicule de transfert (16) à l'aide du dispositif d'attelage (28).

2. Système conformément à la revendication 1, **caractérisé en ce que** le point de remorquage (24) se trouve dans la charnière de basculement (18) de la benne basculante (20) du véhicule de transfert (16).

3. Système conformément à l'une quelconque des revendications 1 ou 2, **caractérisé en ce que** le dispositif d'attelage (28) comprend des pattes (30) pour suspendre l'élément d'attelage (33) sous l'arbre pivot transversal (21) de la charnière de basculement (18), ainsi qu'une structure d'attelage (35) située entre les pattes (30), laquelle structure d'attelage (35) inclut l'élément d'attelage (33).

4. Système conformément à la revendication 3, **caractérisé en ce que** l'arbre pivot transversal (21) est composé de deux axes de mâchoire (36) formant des prolongements sur lesquels sont fixées les pattes (30).

5. Système conformément à l'une quelconque des revendications 1 à 4, **caractérisé en ce que** le point d'appui (31) fait partie du cadre (74) du véhicule de transfert (16).

6. Système conformément à l'une quelconque des revendications 1 à 5, **caractérisé en ce que** le point d'appui (31) est un bloc d'attelage (38) intégré au véhicule de transfert (16) destiné à maintenir le bras de torsion (40) sur le véhicule de transfert (16), et **en ce que** la structure d'attelage (35) comprend une plaque d'attelage (32) et un élément d'attelage (33), à savoir une boule d'attelage (34), intégrée à la plaque d'attelage (32).

7. Système conformément à la revendication 6, **caractérisé en ce que** la boule d'attelage (34) comprend un trou de verrouillage (42) et une goupille de verrouillage (44) traversant le trou de verrouillage (42) afin de maintenir la flèche d'attelage (26) de la remorque à plateau bas (22) fixée au point de remorquage (24).

8. Système conformément à l'une quelconque des revendications 6 ou 7, **caractérisé en ce que** la boule d'attelage (34) comprend
- un montant (64) permettant de fixer la boule d'attelage (34) à la plaque d'attelage (32),
- une pièce courbée (66) fixée au montant (64) permettant la rotation de la remorque à plateau bas (22) autour d'un axe horizontal et d'un axe vertical par rapport au point de remorquage (24),
- une pièce conique avec rétrécissement (68) fixée à la pièce courbée (66) afin de faciliter la fixation de la flèche d'attelage (26),
- un trou de verrouillage (42) situé dans la pièce conique (68), et
- une goupille de verrouillage (44) placée dans le trou de verrouillage (42) afin de fixer la flèche d'attelage (26) à la boule d'attelage (34).

9. Système conformément à l'une quelconque des revendications 6 à 8, **caractérisé en ce que** la flèche d'attelage (26) de la remorque à plateau bas (22) inclut un bras pour boule d'attelage (56) avec des plages d'inclinaison (58) conçues pour supporter à la fois des charges verticales et horizontales, et pour permettre les mouvements de rotation et de changement de direction.

10. Système conformément à l'une quelconque des revendications 3 à 5, **caractérisé en ce que** la structure d'attelage (35) intègre une structure de cadre (85) et l'élément d'attelage (33) attaché à la structure de cadre (85), où l'élément d'attelage (33) correspond à un crochet d'attelage (86) et la flèche d'attelage (26) intègre un anneau de remorquage (88) permettant de fixer la remorque à plateau bas (22) au crochet d'attelage (86).

11. Système conformément à la revendication 10, **caractérisé en ce que** le bras de torsion (40) est positionné de manière à s'appuyer sur le cadre (74) du véhicule de transfert (16).

12. Système conformément à l'une quelconque des revendications 1 à 11, **caractérisé en ce qu'**entre le châssis (46) inclus dans la remorque à plateau bas (22) et la flèche d'attelage (26) se situe une fixation transversale (48) placée perpendiculairement à la remorque à plateau bas (22) et quasiment perpendiculairement au sens de marche de la remorque à plateau bas (22), laquelle remorque à plateau bas (22) inclut en outre un actionneur (50) placé entre la flèche d'attelage (26) et le châssis (46) permettant de faire pivoter le châssis (46) et la plateforme (25) autour de la fixation transversale (48) par rapport à la flèche d'attelage (26) afin de faire passer la remorque à plateau bas (22) de la position de chargement à la position de transport.

13. Système conformément à la revendication 12, **caractérisé en ce que** la remorque à plateau bas (22) intègre un bras d'attelage (78) relié à la partie avant (47) du châssis (46), **en ce que** la flèche d'attelage (26) comprend des longerons (27) reliés à la partie avant (47) du châssis (46) de la remorque à plateau bas (22) à l'aide d'une fixation transversale (48) permettant le mouvement de la plateforme (25) par rapport à la flèche d'attelage (26), et **en ce qu'**un deuxième bras d'attelage (80) est situé à un certain angle par rapport à l'axe formé par la structure en A (29) des longerons (27), où l'actionneur (50) se trouve entre le bras d'attelage (78) et le deuxième bras d'attelage (80) pour permettre le mouvement de la plateforme (25) par rapport à la flèche d'attelage (26).

14. Système conformément à l'une quelconque des revendications 2 à 13, **caractérisé en ce que** le dispositif d'attelage (28) intègre en outre des axes de mâchoire plus longs (36), grâce auxquels la benne basculante (20) et le dispositif d'attelage (28) sont fixés simultanément à la charnière de basculement (18) de la benne basculante (20).

15. Procédé logistique appliqué dans une mine ou une carrière, où le procédé est utilisé pour
- extraire des matériaux du sol à l'aide de machines de travail (13),
- déplacer du matériel à l'aide de véhicules de transfert avec essieux directeurs sur châssis articulé (16) vers chaque véhicule de transfert (16) à l'aide d'une benne basculante (20) fixée avec une charnière de basculement (18),
- déplacer des machines de travail (13) vers un nouveau site de travail à l'aide d'une remorque à plateau bas (22),
où dans le procédé,
- au moins une partie desdits véhicules de transfert (16) comporte un point de remorquage (24) pour la remorque à plateau bas (22) au niveau de la charnière de basculement (18) de la benne basculante (20) du véhicule de transfert (16) ainsi qu'un point d'appui (31) situé à une certaine distance sous le point de remorquage (24) pour former un support de couple, **caractérisé en ce que**
- la remorque à plateau bas (22) est fixée au point de remorquage (24) du véhicule de transfert (16) et au point d'appui (31) lorsque la benne basculante (20) est positionnée à l'aide d'un dispositif d'attelage (28), où la remorque à plateau bas (22) est fixée à l'élément d'attelage (33) inclus dans le dispositif d'attelage (28), et
- chaque machine de travail (13) est déplacée à l'aide de la remorque à plateau bas (22) par tractage de la remorque à plateau bas (22) par le véhicule de transfert (16).
